# EUROPEAN PATENT APPLICATION

(11) **EP 3 447 737 A1**
(43) Date of publication of application: **27.02.2019**
(21) Application number: 17187580.0
(22) Date of filing: 23.08.2017
(51) Int. Cl.: G07B 15/02, H04W 88/04

(54) **Hotspot internet access method for transportation card readers**

(71) Applicant: Vestel Elektronik Sanayi ve Ticaret A.S., 45030 Manisa (TR)
(72) Inventor: DÖNER, Cagdas, 45030 Manisa (TR)
(74) Representative: Ascherl, Andreas

(57) **Abstract**

The present invention refers to a method for providing hotspot internet access to transportation card readers (2) at the time of no cellular network or no GPRS access in the transportation card reader (2). The method can allow the passenger to create a hotspot for allowing the transportation card reader (2) to get access to the internet through a transport provider App (4) installed in the passenger mobile device. The secure internet connection can be established by registering and obtaining SSID, password from a control App (3) of the transportation card reader (2) during the installation of the transport provider App (4) in the passenger mobile device. The method enables the passenger to use the transport even at locations where internet service is not available for the transportation card reader (2). Further, the method provides a solution for providing hotspot internet access to transportation card reader (2) at the time of no cellular network in the transportation card readers (2) as well as in the passenger mobile device by sharing co-passenger's cellular data.

## Description

This invention refers to a method for providing hotspot internet access to transportation card readers at the time of no cellular network or no GPRS access in the transportation card readers according to claim 1, and a system for providing hotspot internet access to transportation card readers at the time of no cellular network or no GPRS access according to claim 4.

### Background of the Invention

In public transportation system card readers are utilized to make people easily travel between locations with the prepaid cards. Each card has a unique ID where they are necessary for paying online to buy credits to travel. The problem is that the transportation card reader needs internet access to validate or verify the passenger payment when they take on to a public transportation vehicle. In a case, if there is no internet service for the transportation card reader in a particular location then payment cannot be done by the passenger and may not use the transportation.

Conventionally, Internet access for the transportation card readers are mostly provided over GPRS and EDGE like GSM standards. That makes the device get dependent on SIM cards. Especially on rural places there is less cellular data access when compared to city centers. Therefore the possibility of secure internet service may not be possible.

Prior art document WO2013109372A1 discloses a taxi fare system for a vehicle includes a meter, a wireless access point carried on the vehicle, a first mobile computing device a wireless, a second mobile computing device, a display and a credit card reader. The meter is configured to receive data from the vehicle indicating distance travelled, to measure waiting time, and to calculate an amount of a passenger fare based at least on the distance travelled and the waiting time. The first mobile computing device is positioned in a driver section of the vehicle and receives data from the meter. The second mobile computing device is positioned in a passenger section of the vehicle and receive card information from the card reader. The first and second mobile computing devices are configured to wirelessly connect to the wireless access point.

In another prior art CN104182875, when the IC (Integrated Circuit) card is inserted into a bank card reading device, the bank card reading device reads the information of the IC card and the card reading device is connected to a mobile device equipped with a communication device with the help of a network. By means of a network module and a network module, the card reading device transmits the read information of the IC card to the mobile device with the communication function, the mobile device receives the information of the bank card and the user inputs the payment amount and the mobile device transmits payment information to a server to complete the transaction.

Both systems have connected in-mobile network connectivity systems to access to the Internet to send and get data from the payment server or payment database.

In a condition that there is no Internet access instantly, these prior systems cannot be implemented to adapt and change their mechanism to connect to a mobile device to get Internet access. Further, having a mobile phone Internet access can give the chance to make devices to access to Internet adaptively.

Card authenticated payment systems need Internet access to verify the payments and credits. So it is crucial for providing an Internet connection for these kind of systems.

The subject-matter of the prior arts need Internet access to verify the payments and credits.

### Object of the Invention

It is therefore the object of the present invention to provide a method, in particular for providing hotspot internet access to transportation card readers at the time of no cellular network or no GPRS access in the transportation card readers, and a system that can work without the need for internet access to be present in the transportation card reader compared to the known transporation systems and methods.

### Description of the Invention

The before mentioned object is solved by a method for providing hotspot internet access to transportation card readers at the time of no cellular network or no GPRS access in the transportation card readers according to claim 1. The method for providing hotspot internet access to transportation card readers at the time of no cellular network or no GPRS access in the transportation card readers according to the present invention preferably comprising the step of allowing one or more passengers to download a transport provider App in the passenger mobile device and registering in the transport provider App for specifying SSID and password for the passenger mobile device to get secure internet connection from the passenger mobile device to the transportation card reader, allowing the passenger to activate the hotspot or access point [AP] in the passenger mobile device before entering into the transporting vehicle, configuring the transportation card reader to recognize the SSID and password of the passenger mobile device and configuring the transportation card reader to authenticate the passenger mobile device to access the hotspot internet through cellular data of the passenger mobile device thereby allowing the passenger to use his/her prepaid card for making payment through the transportation card reader.

This solution is beneficial since such method provides a hotspot internet access to transportation card readers at the time of no cellular network or no GPRS access in the transportation card readers.

Further preferred embodiments are subject-matter of dependent claims and/or of the following specification parts.

According to a preferred embodiment of the present invention, the method for providing hotspot internet access to transportation card readers further comprising the step of, allowing at least a passenger to use his/her prepaid card for making payment through the transportation card reader while using the hotspot internet access through cellular data of at least one co-passenger mobile device, allowing the co-passenger to activate the hotspot or access point [AP] in the co-passenger mobile device before entering into the transporting vehicle, configuring the transportation card reader to recognize the SSID and password of the co-passenger mobile device, configuring the transportation card reader to authenticate the co-passenger mobile device to access the hotspot internet through cellular data of the co-passenger mobile device.

According to a preferred embodiment of the present invention, the method for providing hotspot internet access to transportation card readers further comprising the step of, obtaining Mac address from the passenger mobile device during registration, allowing the passenger to limit the accessibility of the transportation card reader by enabling privacy settings in the transport provider App, and verifying Mac address from the passenger mobile device before authenticating the passenger mobile device to connect with the transportation card reader for additional security.

The before mentioned object is also solved by a system for providing hotspot internet access to transportation card readers at the time of no cellular network or no GPRS access in the transportation card readers, according to claim 4. The system comprises of, in particular at least a transportation card reader for making payment through prepaid cards of passengers, at least a passenger mobile device provided with cellular data along with activation of hotspot or access point [AP] before entering into the transporting vehicle, and a transport provider App can be configured for downloading and registering the transport provider App in the passenger mobile device. The transport provider App can be configured for specifying SSID and password for the passenger mobile device to get secure internet connection from the passenger mobile device to the transportation card reader. The transportation card reader can be configured to recognize the SSID and password of the passenger mobile device. The transportation card reader can be configured to authenticate the passenger mobile device to access the hotspot internet through cellular data of the passenger mobile device thereby allowing the passenger to use his prepaid card for making payment through the transportation card reader.

According to a further preferred embodiment of the present invention, the transportation card reader can be further configured to authenticate the passenger mobile device to access the hotspot internet through cellular data of the at least one co-passenger mobile device thereby allowing the passenger to use his/her prepaid card for making payment through the transportation card reader. The transport provider App further configured for allowing the passenger to set a privacy condition to allow the transportation card reader for searching the passenger SSID name alone for establishing internet access.

According to a further embodiment of the present invention, the transport provider App can be further configured for providing generic SSID and password for the passenger mobile device thereby to increase security by sending ciphering data with algorithms including AES and SHA. The transport provider App can be further configured for providing secure internet connection from the passenger mobile device to the transportation card reader. The transport provider App can be further configured for obtaining Mac address from the passenger mobile device during registration. The transportation card reader can be configured for verifying Mac address from the passenger mobile device before authenticating the passenger mobile device to connect with the transportation card reader for additional security.

Further benefits, goals and features of the present invention will be described by the following specification of the attached figures, in which components of the invention are exemplarily illustrated. Components of the devices and method according to the inventions, which match at least essentially with respect to their function can be marked with the same reference sign, wherein such components do not have to be marked or described in all figures.

The invention is just exemplarily described with respect to the attached figures in the following.

### Brief Description of the Drawings

- Fig. 1: illustrates the general block diagram of the system for providing hotspot internet access to transportation card readers at the time of no cellular network or no GPRS access in the transportation card readers, in accordance with an embodiment of the present invention; and
- Fig. 2: illustrates a method of providing hotspot internet access to transportation card readers at the time of no cellular network or no GPRS access in the transportation card readers, in accordance with an embodiment of the present invention.

### Detailed Description of the Drawings

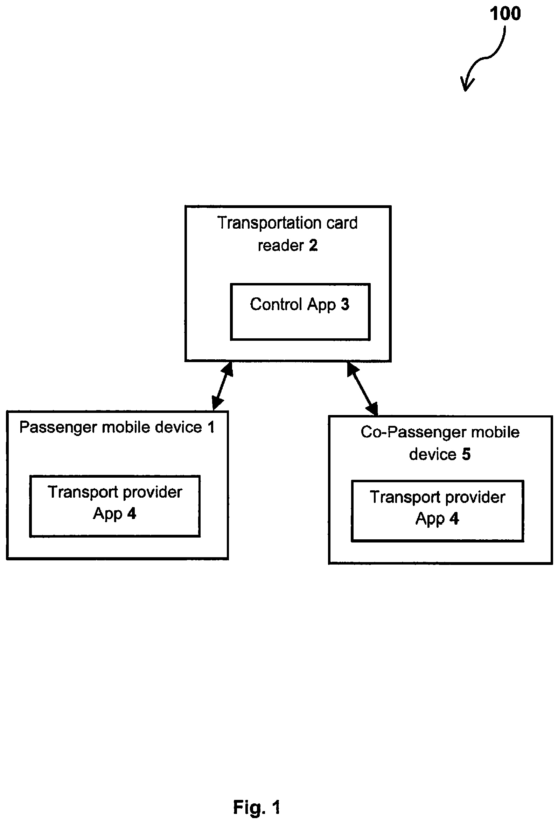

Fig. 1 illustrates the general block diagram 100 of the system for providing hotspot internet access to transportation card readers at the time of no cellular network or no GPRS access in the transportation card readers, in accordance with an embodiment of the present invention.

The general block diagram illustrated in fig. 1 depicts the system for providing hotspot internet access to transportation card reader 2 at the time of no cellular network or no GPRS access in the transportation card reader 2. The system comprises of the at least a transportation card reader 2 for making payment through prepaid cards of passengers, at least a passenger mobile device 1 provided with cellular data along with activation of hotspot or access point [AP] before entering into the transporting vehicle, and a transport provider App 4 can be configured for downloading and registering the transport provider App 4 in the passenger mobile device 1. The transportation card reader 2 includes a control App 3 for managing back end operations of the transportation card reader 2. Further, the transportation card reader 2 is mostly provided over GPRS and EDGE like GSM standards.

According to a further preferred embodiment of the present invention, the passenger who is taking on the transportation vehicle (bus, train etc.) enabling his/her access point (AP) with a specific mobile phone application. The transport provider App is provided by transportation vendor or operator and has handshake and connectivity credentials in it. The backend process may not be visible to the passenger, since he/she can only enable the AP connectivity from the smart phone application before taking on the vehicle. On the background, the card reader may be made to connect to the AP with specifying SSID and password and then access to the internet via mobile phone AP.

According to a further preferred embodiment of the present invention, the transport provider App 4 can be configured for specifying SSID and password for the passenger mobile device 1 to get secure internet connection from the passenger mobile device 1 to the transportation card reader 2. The transportation card reader 2 can be configured to recognize the SSID and password of the passenger mobile device 1. That is the control App 3 in the transportation card reader 2 can be configured for verifying the SSID and password for the passenger mobile device 1. The control App 3 can be further configured for verifying Mac address of the passenger mobile device 1. For the sake of more security, the MAC address may be previously provided and checked to the card reader via Internet access to register the passenger to secure network. Otherwise, a hacker may enable a predictable SSID and takes all the data over his/her mobile phone. The transportation card reader 2 can be configured to authenticate the passenger mobile device 1 to access the hotspot internet through cellular data of the passenger mobile device 1 thereby allowing the passenger to use his prepaid card for making payment through the transportation card reader 2.

According to a further another embodiment of the present invention, the transportation card reader 2 can be further configured to authenticate the passenger mobile device 1 to access the hotspot internet through cellular data of the at least one co-passenger mobile device 5 thereby allowing the passenger to use his/her prepaid card for making payment through the transportation card reader 2. The transport provider App 4 further configured for allowing the passenger to set a privacy condition to allow the transportation card reader 2 for searching the passenger SSID name alone for establishing internet access. That is, the passenger may not trust the connectivity of the card reader so he/she can define this condition to the transportation vendor and each time he/she makes read the card to the card reader, this decision can be checked and card reader directly searches for passenger's hotspot SSID name.

According to a further preferred embodiment of the present invention, the transport provider App 4 can be further configured for providing generic SSID and password for the passenger mobile device 1 thereby to increase security by sending ciphering data with algorithms including AES and SHA. The transport provider App 4 can be further configured for providing secure internet connection from the passenger mobile device 1 to the transportation card reader 2. The transport provider App 4 can be further configured for obtaining Mac address from the passenger mobile device 1 during registration. The transportation card reader 2 can be configured for verifying Mac address from the passenger mobile device 1 before authenticating the passenger mobile device 1 to connect with the transportation card reader 2 for additional security.

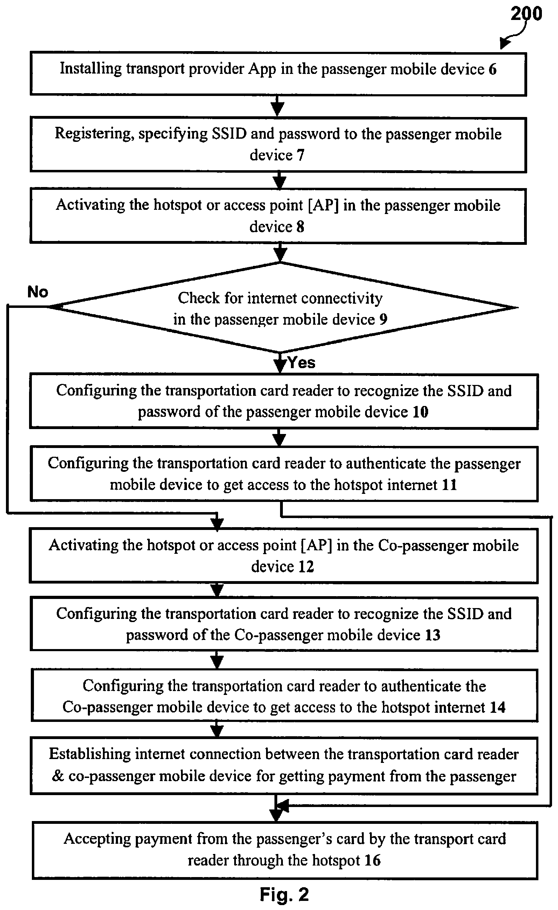

Fig. 2 illustrates a method 200 of providing hotspot internet access to transportation card reader at the time of no cellular network or no GPRS access in the transportation card reader, in accordance with an embodiment of the present invention. The method comprising the steps of,
at block 6, before using the transport the passenger can install the transport provider App 4 in the passenger mobile device 1;
at block 7, the passenger is allowed to register the passenger mobile device 1 through the transport provider App and also the transport provider App specifies SSID and password to the passenger mobile device 1. Further, a control App 3 of the transportation card reader 2 can verify the SSID and password of the passenger mobile device 1 before establishing a secure internet connection. Further, the mac address also verified from the passenger mobile device 1 before authenticating the passenger mobile device 1 to connect with the transportation card reader 2 for additional security;
at block 8, whenever the passenger uses the transport, the passenger need to activate the hotspot or access point [AP] in the passenger mobile device 1;
at block 9, at the time of using the transport the passenger has to show the card to the card reader for making payment. For that the transportation card reader 2 requires internet access. If the transportation card reader 2 does not have any internet connection means then the internet connectivity in the passenger mobile device 1 is checked for creating hotspot;
at block 10, if there is internet access in the passenger's mobile device then the transportation card reader 2 can be configured to recognize the SSID and password of the passenger mobile device 1;
at block 11, the transportation card reader 2 can be configured to authenticate the passenger mobile device 1 to get access to the hotspot internet;
at block 12, if there is no internet access in the passenger's mobile device then the hotspot or access point [AP] in the co-passenger mobile device 5 can be activated;
at block 13, if there is internet access in the passenger's mobile device then the transportation card reader 2 can be configured to recognize the SSID and password of the co-passenger mobile device 5;
at block 14, the transportation card reader 2 can be configured to authenticate the co-passenger mobile device 5 to get access to the hotspot internet;
at block 15, the internet connection between the transportation card reader 2 and co-passenger mobile device 5 can be established for getting payment from the passenger; and
at block 16, the payment from the passenger's card can be accepted by the transportation card reader 2 through the hotspot.

Thus, the present invention refers to a method for providing hotspot internet access to transportation card readers 2 at the time of no cellular network or no GPRS access in the transportation card reader 2. The method can allow the passenger to create a hotspot for allowing the transportation card reader 2 to get access to the internet through a transport provider App 4 installed in the passenger mobile device. The secure internet connection can be established by registering and obtaining SSID, password from a control App 3 of the transportation card reader 2 during the installation of the transport provider App 4 in the passenger mobile device. The method enables the passenger to use the transport even at locations where internet service is not available for the transportation card reader 2. Further, the method provides a solution for providing hotspot internet access to transportation card reader 2 at the time of no cellular network in the transportation card readers 2 as well as in the passenger mobile device by sharing co-passenger's cellular data.

### List of reference numbers

- 1: Passenger mobile device
- 2: Transportation card reader
- 3: Control App
- 4: Transport provider App
- 5: Co-passenger mobile device
- 6: Installing transport provider App in the passenger mobile device
- 7: Registering, specifying SSID and password to the passenger mobile device
- 8: Activating the hotspot or access point [AP] in the passenger mobile device
- 9: Check for internet connectivity in the passenger mobile device
- 10: Configuring the transportation card reader to recognize the SSID and password of the passenger mobile device
- 11: Configuring the transportation card reader to authenticate the passenger mobile device to get access to the hotspot internet
- 12: Activating the hotspot or access point [AP] in the Co-passenger mobile device
- 13: Configuring the transportation card reader to recognize the SSID and password of the Co-passenger mobile device
- 14: Configuring the transportation card reader to authenticate the Co-passenger mobile device to get access to the hotspot internet
- 15: Establishing internet connection between the transportation card reader and co-passenger mobile device for getting payment from the passenger
- 16: Accepting payment from the passenger's card by the transportation card reader through the hotspot

## Claims

1. A method for providing hotspot internet access to transportation card readers at the time of no cellular network or no GPRS access in the transportation card readers, wherein the method comprising the step of:
allowing one or more passengers to download a transport provider App (4) in the passenger mobile device (1) and registering in the transport provider App (4) for specifying SSID and password for the passenger mobile device (1) to get secure internet connection from the passenger mobile device (1) to the transportation card reader (2);
allowing the passenger to activate the hotspot or access point [AP] in the passenger mobile device (1) before entering into the transporting vehicle;
configuring the transportation card reader (2) to recognize the SSID and password of the passenger mobile device (1); and
configuring the transportation card reader (2) to authenticate the passenger mobile device (1) to access the hotspot internet through cellular data of the passenger mobile device (1) thereby allowing the passenger to use his/her prepaid card for making payment through the transportation card reader (2).

2. The method for providing hotspot internet access to transportation card readers as claimed in claim 1, wherein the method further comprising the step of:
allowing at least a passenger to use his/her prepaid card for making payment through the transportation card reader (2) while using the hotspot internet access through cellular data of at least one co-passenger mobile device (5);
allowing the co-passenger to activate the hotspot or access point [AP] in the co-passenger mobile device (5) before entering into the transporting vehicle;
configuring the transportation card reader (2) to recognize the SSID and password of the co-passenger mobile device (5);
configuring the transportation card reader (2) to authenticate the co-passenger mobile device (5) to access the hotspot internet through cellular data of the co-passenger mobile device (5).

3. The method for providing hotspot internet access to transportation card readers as claimed in claim 1, wherein the method further comprising the steps of,
obtaining Mac address from the passenger mobile device during registration;
allowing the passenger to limit the accessibility of the transportation card reader (2) by enabling privacy settings in the transport provider App (4); and
verifying Mac address from the passenger mobile device before authenticating the passenger mobile device to connect with the transportation card reader (2) for additional security.

4. A system for providing hotspot internet access to transportation card readers at the time of no cellular network or no GPRS access in the transportation card readers, wherein the system comprises of:
at least a transportation card reader (2) for making payment through prepaid cards of passengers;
at least a passenger mobile device (1) provided with cellular data along with activation of hotspot or access point [AP] before entering into the transporting vehicle; and
a transport provider App (4) configured for downloading and registering the transport provider App 4 in the passenger mobile device (1);
wherein the transport provider App (4) configured for specifying SSID and password for the passenger mobile device (1) to get secure internet connection from the passenger mobile device to the transportation card reader (2);
wherein the transportation card reader (2) configured to recognize the SSID and password of the passenger mobile device;
wherein the transportation card reader (2) configured to authenticate the passenger mobile device (1) to access the hotspot internet through cellular data of the passenger mobile device (1) thereby allowing the passenger to use his prepaid card for making payment through the transportation card reader (2).

5. The system of claim 4, wherein the transportation card reader (2) further configured to authenticate the passenger mobile device to access the hotspot internet through cellular data of the at least one co-passenger mobile device (5) thereby allowing the passenger to use his/her prepaid card for making payment through the transportation card reader (2).

6. The system of claim 4, wherein the transport provider App (4) further configured for allowing the passenger to set a privacy condition to allow the transportation card reader (2) for searching the passenger SSID name alone for establishing internet access.

7. The system of claim 4, wherein the transport provider App (4) further configured for providing generic SSID and password for the passenger mobile device thereby to increase security by sending ciphering data with algorithms including AES and SHA.

8. The system of claim 4, wherein the transport provider App (4) further configured for providing secure internet connection from the passenger mobile device to the transportation card reader (2).

9. The system of claim 4, wherein the transport provider App (4) further configured for obtaining Mac address from the passenger mobile device during registration.

10. The system of claim 4, wherein the transportation card reader (2) configured for verifying Mac address from the passenger mobile device (1) before authenticating the passenger mobile device (1) to connect with the transportation card reader (2) for additional security.
